# EUROPÄISCHE PATENTSCHRIFT

(11) **EP 1 335 573 B1**
(45) Veröffentlichungstag und Bekanntmachung des Hinweises auf die Patenterteilung: **18.04.2007**
(21) Anmeldenummer: 02002720.7
(22) Anmeldetag: 06.02.2002
(51) Int. Cl.: H04M 7/00, H04M 11/06, H04M 3/54, H04Q 3/00, H04M 3/42, H04M 3/436

(54) **Verfahren zur Erhöhung der Teilnehmererreichbarkeit**
Method for improving the reachability of subscribers
Méthode pour améliorer la disponibilité de l'appelé

(43) Veröffentlichungstag der Anmeldung: 13.08.2003
(73) Patentinhaber: SIEMENS AKTIENGESELLSCHAFT, 80333 München (DE)
(72) Erfinder: Mitreuter, Ulrich, Dr., 82549 Koenigsdorf (DE); Zygan-Maus, Renate, Dr., 81477 München (DE)

(56) Entgegenhaltungen:
- EP-A- 0 959 593
- WO-A-02/03714
- DE-A- 19 914 744

## Beschreibung

### Festnetz-Telefonanschlüsse

Ein Teilnehmer eines herkömmlichen Festnetz-Telefondienstes ist nur in einem kleinen geographischen Bereich, der seinem Netzanschlußpunkt zugeordnet ist, unter der ihm zugewiesenen Telefonnummer erreichbar. Die Erreichbarkeit des Teilnehmers an einem anderen Ort oder gar weltweit ist nur umständlich und unflexibel realisierbar und für den Teilnehmer in vielen Fällen mit hohen Kosten verbunden.

Beispiele für Verfahren zur Steigerung Erreichbarkeit des Festnetz-Teilnehmers sind:
- feste Anrufumleitungen zu einer vorbestimmten Telefonnummer,
- Anrufumleitung bei Nichtmelden zu einer vorbestimmten Telefonnummer,
- One-Number-Dienste - dabei handelt es sich um Dienste, bei denen ein Festnetzendgerät und ein zugeordnetes mobiles Endgerät unter der gleichen Festnetzrufnummer erreichbar sind - bei denen der Anruf an ein Mobilfunktelefon des Teilnehmers weitergeleitet werden kann.

Bei diesen bekannten Verfahren treten jedoch folgende Probleme auf:
- Die Verfahren sind durch Teilnehmer-Selbstadministration gesteuert und dadurch relativ unflexibel, darüber hinaus ist die Steuerung über das Wählfeld eines Telefons umständlich und fehlerbehaftet.
- Die Anrufweiterleitung ist nicht selektiv, d.h. auch unwichtige/unerwünschte Anrufe werden bei teilweise hohen Umleitungsgebühren umgeleitet.
- Die Anrufweiterleitung kann nicht von jedem Telefon aus administriert werden, da nicht jedes Telefon das Mehrfrequenzwählverfahren unterstützt, so z.B. bestimmte digitale Nebenstellenapparate.
- Die One-Number-Dienste unterliegen den für Mobilfunk-Telefonanschlüsse geltenden Einschränkungen wie nachstehend aufgeführt.

### Mobilfunk-Telefonanschlüsse

Ein Teilnehmer eines herkömmlichen GSM-Mobilfunk-Telefondienstes ist in allen Ländern, mit denen sein Mobilfunkdienstanbieter Roaming-Abkommen hat, erreichbar. Anrufe zu seiner Mobilfunknummer sind in diesem Fall für ihn sehr teuer, ebenso wie das fallweise Umleiten eines ankommenden Anrufes durch den Mobilfunkteilnehmer etwa zu seiner Voicemailbox in seinem Heimat-Mobilfunknetz, d.h. der Teilnehmer leitet bestimmte ankommende Anrufe z.B. durch Betätigen einer Taste seines Endgerätes um, während er andere ankommende Anrufe annimmt .

Zur Vermeidung der Roaming-Kosten für ankommende Rufe bieten die Mobilfunkbetreiber Anrufumleitungen zu Voicemailboxen im Heimat-Mobilfunknetz oder das Abweisen aller Anrufe an. In diesem Fall ist aber der Mobilfunkteilnehmer nicht mehr direkt über ankommende Rufe informiert. Die angebotenen Verfahren basieren auf Teilnehmerselbsteingaben fester Regeln in das Teilnehmerprofil und erlauben keine individuelle Rufbehandlung, beispielsweise die Annahme nur bestimmter ankommender Anrufe.

Somit existiert für Mobilfunk-Teilnehmer in Form des Roaming zwar ein Verfahren, daß dem Teilnehmer eine gewisse Mobilität über sein Heimat-Mobilfunknetz hinaus erlaubt, allerdings ist dieses Roaming für den Teilnehmer mit hohen Kosten verbunden und auch nur dort anwendbar, wo Netzabdeckung eines geeigneten Mobilfunknetzes und ein entsprechendes Roaming-Abkommen des jeweiligen Netzbetreibers mit dem Heimat-Netzbetreiber gleichermaßen vorliegen.

WO02/03714, DE19914744 und EP0959593 beschreiben nach diesseitiger Auffassung verschiedene Lösungen des Problems, dass bei einem analogen Telefonanschluss der sowohl für die Modem-Einwahl für einen Internetzugang, als auch für Telefonie genutzt wird, eingehende Sprachverbindungen mit einem Besetzt-Signal abgewiesen werden, während der Anschluss für die Modem-Einwahl genutzt wird.

Die der vorliegenden Erfindung zugrundeliegende Aufgabe besteht darin, die bekannten Verfahren zur Erhöhung der Teilnehmererreichbarkeit zu verbessern.

Diese Aufgabe wird durch ein Verfahren zur Steuerung eines Sprachkommunikationsanschlusses über ein Datennetz gemäß der Merkmale des Patentanspruchs 1 gelöst.

Bevorzugte Ausführungsformen sind Gegenstand der abhängigen Ansprüche.

Erfindungsgemäß wird die Aufgabe gelöst, indem
- ankommende Verbindungen des Sprachkommunikationsanschlusses über einen beliebigen Datennetz-Anschluß signalisiert werden,
- die über das Datennetz signalisierten ankommenden Verbindungen entsprechend einer Kommunikationsadresse eines verbindungsanfordernden Sprachkommunikationsanschlusses fallweise behandelt werden.

Die hier beschriebene Erfindung ermöglicht es einem Teilnehmer, über alle ankommenden Verbindungen benachrichtigt zu werden und ihre Behandlung individuell zu steuern.

Im folgenden wird das erfindungsgemäße Verfahren als Ausführungsbeispiel anhand von zwei Zeichnungen näher erläutert.

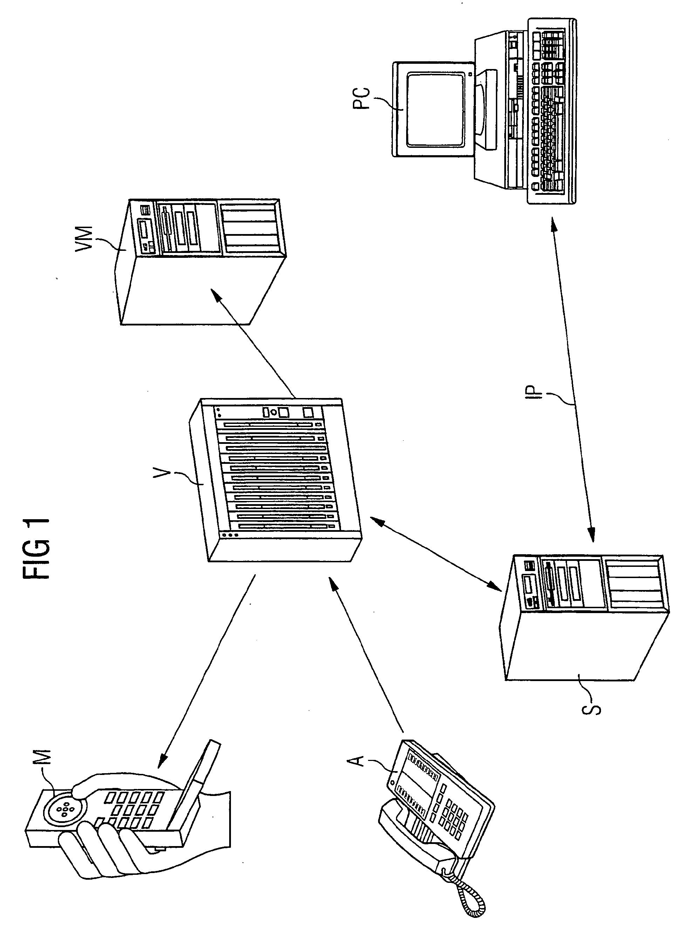

Figur 1 zeigt eine schematische Darstellung der Anwendung des erfindungsgemäßen Verfahrens für einen Internet-Follow-Me Dienst für einen herkömmlichen Festnetz-Anschluß eines gerufenen Teilnehmers. In Figur 1 ist ein Datenendgerät PC des gerufenen Teilnehmers dargestellt, verbunden über das Internet mittels Internetprotokoll IP mit einem Diensteserver S. Diensteserver S ist mit einer Teilnehmervermittlungsstelle V verbunden, zu der ankommende Anrufe eines Anrufers A zur Weiterleitung an den Festnetz-Anschluß des gerufenen Teilnehmers (nicht dargestellt) weitergeleitet werden. Ferner sind dargestellt ein Voicemailsystem VM und ein Mobiltelefon M, zu denen Anrufe, die für den Festnetz-Anschluß des gerufenen Teilnehmers bestimmt sind, weitergeleitet werden können, beide - ggf. über weitere, nicht dargestellte Netzelemente - verbunden mit der Teilnehmervermittlungsstelle V.

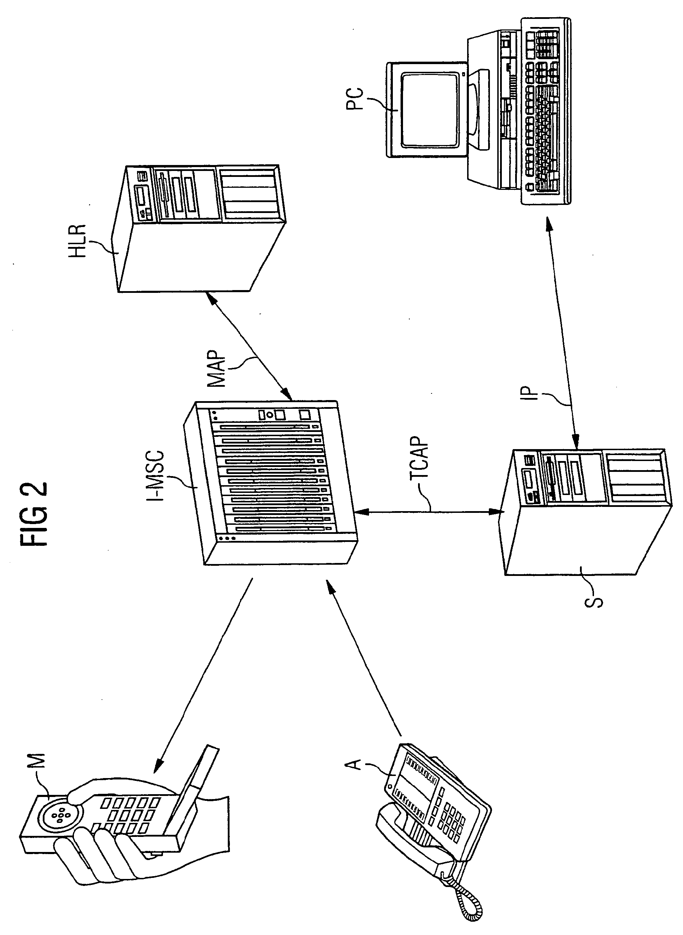

Figur 2 zeigt eine schematische Darstellung der Anwendung des erfindungsgemäßen Verfahrens für einen Internet-Follow-Me Dienst für einen Mobilfunk-Anschluß eines gerufenen Teilnehmers, im folgenden bezeichnet als Mobile Internet-Follow-Me. In Figur 2 ist wiederum das Datenendgerät PC des gerufenen Teilnehmers dargestellt, verbunden über das Internet mittels Internetprotokoll IP mit dem Diensteserver S. Diensteserver S ist mit einer Mobilfunk-Vermittlungsstelle I-MSC verbunden, zu der ankommende Anrufe des Anrufers A zur Weiterleitung an das Mobiltelefon M des gerufenen Teilnehmers weitergeleitet werden. Ferner sind dargestellt ein Home Location Register HLR, welches mittels des Mobile Application Protocol MAP mit der Mobilfunk-Vermittlungsstelle I-MSC verbunden ist.

Im folgenden wird im Zusammenhang mit Figur 1 das erfindungsgemäße Verfahren "Internet-Follow-Me für Festnetz-Anschlüsse" erläutert.

Ein Nutzer des Dienstes Internet-Follow-Me, d.h. der gerufene Teilnehmer, installiert eine Client Software auf seinem Datenendgerät PC. Mit dieser Software kann sich der Nutzer, sobald ein beliebiger Internet-Zugang IP hergestellt ist, bei einem Diensteserver S registrieren. Dazu sendet die Client Software eine Registrierungsnachricht an den Diensteserver S. Diese Registrierungsnachricht enthält die aktuelle Adresse (z.B. die IP-Adresse) des Datenendgeräts PC des Nutzers sowie die Nummer des Telefonanschlusses, für welchen der Nutzer den Internet-Follow-Me Dienst subskribiert hat. Der Internet-Follow-Me Diensteserver S signalisiert an die Teilnehmervermittlungsstelle V dieses Telefonanschlusses die Aktivierung des Dienstes Internet-Follow-Me. Kommt ein Ruf für diesen Telefonanschluß an, so signalisiert die Teilnehmervermittlungsstelle V die Nummer des Anrufenden A zum Internet-Follow-Me Diensteserver S. Dieser sendet die Information über das Internet IP an das registrierte Datenendgerät PC des gerufenen Teilnehmers. Diesem wird angezeigt, daß ein Ruf für seinen zu steuernden Telefonanschluß angekommen ist. Dabei wird die Nummer des Anrufers A angezeigt. Der gerufene Teilnehmer kann nun über die Behandlung des ankommenden Rufes entscheiden:
- Der Ruf wird abgelehnt, der Anrufende A hört ein Besetztzeichen.
- Der Ruf wird als VoIP Verbindung (Voice over IP, Sprachübertragung über das Internetprotokoll) an den Rechner des gerufenen Teilnehmers weitergeleitet.
- Der Ruf wird an eine beliebige, durch den gerufenen Teilnehmer vorzugebende Rufnummer weitergeleitet.
- Der Ruf wird an eine Voicemailbox VM weitergeleitet.
- Der Ruf wird direkt an den zu steuernden Telefonanschluß durchgestellt.
- Der Internet-Follow-Me Dienst wird übergangen, der Ruf wird in der Teilnehmervermittlungsstelle V ganz normal als ankommender Ruf behandelt.

Hat der gerufene Teilnehmer die Entscheidung getroffen, wird diese an den Diensteserver S signalisiert. Der Diensteserver S sendet eine Nachricht an die Teilnehmervermittlungsstelle V. Entsprechend der getroffenen Entscheidung des gerufenen Teilnehmers gemäß obenstehender Aufzählung wird nun:
- dem Anrufer ein Besetztzeichen angelegt,
- der ankommende Ruf an ein VoIP-Gateway weitergeleitet (nicht dargestellt),
- der ankommende Ruf an eine in der Nachricht enthaltene Rufnummer weitergeleitet, z.B. zum Mobiltelefon M des gerufenen Teilnehmers,
- der ankommende Ruf an eine Voicemailbox VM weitergeleitet,
- der ankommende Ruf dem zu steuernden Telefonanschluß zugestellt, wobei eventuelle Teilnehmerdienste dieses Anschlusses (z.B. Rufweiterleitung) übergangen werden, oder
- die Behandlung des ankommenden Rufes erfolgt nach den normalen Prozeduren der Teilnehmervermittlungsstelle V für diesen Telefonanschluß (z.B. Rufweiterleitung), d.h. der Internet-Follow-Me Dienst wird ignoriert.

Beendet der Internet-Follow-Me Dienstenutzer die Internetverbindung IP, so sendet die Client Software zuvor eine Deregistrierungsnachricht an den Diensteserver S. Dieser sendet eine Nachricht an die Teilnehmervermittlungsstelle V, die den Dienst Internet-Follow-Me dort deaktiviert. Danach erfolgt die Behandlung ankommender Rufe in der Teilnehmervermittlungsstelle V wieder wie üblich.

Verwendet der Dienstenutzer den zu steuernden Telefonanschluß gleichzeitig für den Zugang zum Internet, bietet Internet Follow Me die gleiche Funktionalität an wie der Dienst Call Waiting Internet (einen virtuellen zweiten Telefonanschluß durch Signalisieren kommender Anrufe bei aktiver Internetsitzung, analog dem Anklopfen bei herkömmlichen Telefonverbindungen).

Mit Bezug auf Figur 2 wird nachstehend eine zweite vorteilhafte Anwendung "Mobile Internet-Follow-Me" des erfindungsgemäßen Prinzips erläutert.

Der Nutzer des Dienstes Mobile Internet-Follow-Me, d.h. der gerufene Teilnehmer, installiert ebenfalls eine Client Software auf seinem Datenendgerät PC, welches er für den Internetzugang IP verwendet. Mit dieser Software erfolgt wiederum die Registrierung des Nutzers beim Diensteserver S. Dazu sendet die Client Software eine Registrierungsnachricht an einen Diensteserver S, welche die aktuelle Adresse (z.B. die IP-Adresse) des Datenendgeräts PC des Nutzers sowie die Nummer des Mobilfunkanschlusses M enthält, für welchen der Nutzer den Mobile Internet-Follow-Me Dienst subskribiert hat. Kommt ein Ruf für die Rufnummer des Mobilfunkanschlusses M des Nutzers des Mobile Internet-Follow-Me Dienstes an, so sendet der Diensteserver S die Information über das Internet IP an das registrierte Datenendgerät PC des gerufenen Teilnehmers. An diesem wird dem gerufenen Teilnehmer der ankommende Ruf und die Nummer des Anrufers A angezeigt. Der Mobile Internet-Follow-Me Dienstenutzer kann nun wiederum über die Behandlung des ankommenden Rufes entscheiden:
- Der Ruf wird abgelehnt, der Anrufende A hört ein Besetztzeichen.
- Der Ruf wird als VoIP Verbindung (Voice over IP, Sprachübertragung über das Internetprotokoll) an den Rechner des gerufenen Teilnehmers weitergeleitet.
- Der Ruf wird an eine beliebige, durch den gerufenen Teilnehmer vorzugebende Rufnummer weitergeleitet.
- Der Ruf wird an eine Voicemailbox (nicht dargestellt) weitergeleitet.
- Der Ruf wird an das Mobilfunktelefon des Dienstenutzers durchgestellt.
- Der Mobile Internet-Follow-Me Dienst wird übergangen, der Ruf wird in der Mobilfunk-Vermittlungsstelle I-MSC ganz normal als ankommender Ruf behandelt.

Hat der gerufene Teilnehmer die Entscheidung getroffen, wird diese an den Diensteserver S signalisiert. Der Diensteserver S sendet eine Nachricht an die Mobilfunk-Vermittlungsstelle I-MSC. Entsprechend der getroffenen Entscheidung des gerufenen Teilnehmers gemäß obenstehender Aufzählung wird nun:
- dem Anrufer ein Besetztzeichen angelegt,
- der ankommende Ruf an ein VoIP-Gateway weitergeleitet (nicht dargestellt),
- der ankommende Ruf an eine in der Nachricht enthaltene Rufnummer weitergeleitet, z.B. zum Mobiltelefon M des gerufenen Teilnehmers,
- der ankommende Ruf an eine Voicemailbox (nicht dargestellt) weitergeleitet,
- der ankommende Ruf dem zu steuernden Mobilfunkanschluß zugestellt, wobei eventuelle Teilnehmerdienste dieses Anschlusses (z.B. Rufweiterleitung) übergangen werden, oder
- die Behandlung des ankommenden Rufes erfolgt nach den normalen Prozeduren der Mobilfunk-Vermittlungsstelle I-MSC für diesen Mobilfunkanschluß M (z.B. Rufweiterleitung), d.h. der Mobile Internet-Follow-Me Dienst wird ignoriert.

Beendet der Mobile Internet-Follow-Me Dienstenutzer die Internetverbindung IP, so sendet die Client Software zuvor eine Deregistrierungsnachricht an den Diensteserver S. Dieser sendet eine Nachricht an die Mobilfunk-Vermittlungsstelle I-MSC, die den Dienst Mobile Internet-Follow-Me dort deaktiviert. Danach erfolgt die Behandlung ankommender Rufe in der Mobilfunk-Vermittlungsstelle I-MSC wieder wie üblich.

Verwendet der Dienstenutzer in einer vorteilhaften Weiterbildung beispielsweise ein GPRS Mobilfunktelefon M (GPRS = General Packet Radio System, paketvermittelndes Mobilfunksystem), kann dieses sowohl zum fallweisen Entgegennehmen der ankommenden Rufe als auch für den Zugang zum Internet verwendet werden.

Im folgenden werden die Abläufe der Signalisierung eines Dienstes Mobile Internet-Follow-Me für GSM-Netze beispielhaft erläutert.

### Netzarchitektur für GSM-Netze

Im Home Location Register HLR, das dem Mobile Internet-Follow-Me Nutzer zugeordnet ist, ist die Adresse des Mobile Internet-Follow-Me Diensteservers S gespeichert. Die Client Software des Mobile Internet-Follow-Me Nutzers sendet nach Aufbau der Internetverbindung IP die Registrierungsnachricht an diesen festgelegten Diensteserver S. Dieser speichert die IP Adresse des Datenendgeräts PC des Nutzers. Ein ankommender Ruf für den Mobile Internet-Follow-Me Nutzer wird zu einer Mobilfunkvermittlungsstelle I-MSC (I-MSC = Interrogating Mobile Switching Center) im Mobilfunknetz des Nutzers geleitet. Die Mobilfunkvermittlungsstelle I-MSC sendet eine SendRoutingInformation Nachricht an das Home Location Register HLR. Das Home Location Register HLR sendet der Mobilfunkvermittlungsstelle I-MSC den Mobile Internet-Follow-Me Indikator zurück, der die Mobilfunkvermittlungsstelle I-MSC informiert, daß der gerufene Teilnehmer den Dienst Mobile Internet-Follow-Me subskribiert hat, sowie die Adresse des Diensteservers S, welcher die IP Adresse des Datenendgeräts PC des Nutzers gespeichert hat. Die Mobilfunkvermittlungsstelle I-MSC sendet eine TCAP Nachricht mit der Rufnummer des Anrufenden A an den Diensteserver S. Der Diensteserver S sendet eine Nachricht über das Internet IP an den Mobile Internet-Follow-Me Nutzer. Der Nutzer trifft, wie vorstehend beschrieben, eine Entscheidung über die Behandlung des Rufes, die über das Internet IP zum Diensteserver S gesendet wird. Dieser gibt die Information mittels einer TCAP Nachricht an die Mobilfunkvermittlungsstelle I-MSC weiter, aufgrund derer die Mobilfunkvermittlungsstelle I-MSC den Ruf behandelt (z.B. an das Mobiltelefon M des Nutzers durchstellt oder den Ruf an eine andere Nummer weiterleitet).

In einer vorteilhaften Weiterbildung des erfindungsgemäßen Prinzips kann vor oder gemeinsam mit der Deregistrierungsnachricht eine Tabelle an den Diensteserver S übertragen werden, in der durch den Nutzer eingetragen wird, wie nach dem Trennen der Internetverbindung mit ankommenden Rufen zu verfahren ist. Beispielsweise können:
- alle Anrufe an den zu steuernden Anschluß durchgestellt werden,
- alle Anrufe zu einer festen Rufnummer oder einem Voicemailsystem umgeleitet werden, oder
- Anrufe gemäß der Rufnummer des Anrufers A nach einer der vorstehenden Methoden behandelt werden.

## Patentansprüche

1. Verfahren zur Steuerung eines Sprachkommunikationsanschlusses eines gerufenen Teilnehmers über ein Datennetz, wobei
- von einem beliebigen, vom Sprachkommunikationsanschluß des gerufenen Teilnehmers verschiedenen Datennetz-Anschluß (IP) an ein den Sprachkommunikationsanschluß des Teilnehmers verwaltendes Netzelement (V, I-MSC, HLR) signalisiert wird, daß ankommende Verbindungen mittels eines mit dem Datennetz-Anschluß (IP) verbundenen Endgeräts (PC) gesteuert werden sollen,
- ankommende Verbindungen des Sprachkommunikationsanschlusses über den Datennetz-Anschluß (IP) an das Endgerät (PC) signalisiert werden,
- die über das Datennetz (IP) signalisierten ankommenden Verbindungen automatisch gemäß vorgebbarer Regeln oder entsprechend einer Handlung an dem Endgerät (PC) des gerufenen Teilnehmers behandelt werden.

2. Verfahren nach Anspruch 1,
**dadurch gekennzeichnet,**
**daß** über das Datennetz (IP) signalisierte ankommende Verbindungen entsprechend einer Kommunikationsadresse eines verbindungsanfordernden Sprachkommunikationsanschlusses (A) behandelt werden.

3. Verfahren nach einem der Ansprüche 1 oder 2,
**dadurch gekennzeichnet,**
**daß** zum Beenden der Steuerung des Sprachkommunikationsanschlusses an das den Sprachkommunikationsanschluß des Teilnehmers verwaltende Netzelement (V, I-MSC, HLR) signalisiert wird, daß ankommende Verbindungen nicht länger mittels edes Endgeräts (PC) gesteuert werden sollen.

4. Verfahren nach einem der Ansprüche 1 bis 3,
**dadurch gekennzeichnet,**
**daß** als Datennetz (IP) das Internet verwendet wird.

5. Verfahren nach einem der Ansprüche 1 bis 4,
**dadurch gekennzeichnet,**
**daß** als Sprachkommunikationsanschluß ein herkömmlicher Telefonanschluß verwendet wird.

6. Verfahren nach einem der Ansprüche 1 bis 5,
**dadurch gekennzeichnet,**
**daß** als Sprachkommunikationsanschluß ein Mobiltelefonanschluß verwendet wird.

## Claims

1. Method for controlling a voice communication terminal of a called party via a data network, wherein
- it is signalled from any data network link (IP), other than from the voice communication terminal of the called party, to a network element (V, I-MSC, HLR) managing the voice communication terminal of said party that incoming calls are to be controlled by means of a terminal device (PC) connected to the data network link (IP),
- incoming calls from the voice communication terminal are signalled to the terminal device (PC) via the data network link (IP),
- the incoming calls signalled via the data network (IP) are processed automatically according to predefinable rules or in accordance with an action at the terminal device (PC) of the called party.

2. Method according to claim 1, **characterised in that** incoming calls signalled via the data network (IP) are processed corresponding to a communication address of a connection-requesting voice communication terminal (A).

3. Method according to one of claims 1 or 2 **characterised in that** to terminate the control of the voice communication terminal it is signalled to the network element (V, I-MSC, HLR) managing the voice communication terminal of said party that incoming calls should no longer be controlled by means of a terminal device (PC).

4. Method according to one of claims 1 to 3, **characterised in that** the internet is used as the data network (IP).

5. Method according to one of claims 1 to 4, **characterised in that** a conventional telephone terminal is used as the voice communication terminal.

6. Method according to one of claims 1 to 5, **characterised in that** a mobile telephone terminal is used as the voice communication terminal.

## Revendications

1. Procédé de contrôle d'un raccordement de communication vocale d'un abonné appelé sur un réseau de données,
dans lequel
- une connexion à un réseau de données (IP) quelconque différente du raccordement de communication vocale de l'abonné appelé signale à un élément de réseau (V, I-MSC, HLR) gérant le raccordement de communication vocale de l'abonné que des liaisons entrantes doivent être contrôlées au moyen d'un terminal (PC) relié à la connexion au réseau de données (IP),
- les liaisons entrantes du raccordement de communication vocale sont signalées au terminal (PC) par le biais de la connexion au réseau de données (IP),
- les liaisons entrantes signalées par le biais du réseau de données (IP) sont traitées automatiquement selon des règles définissables à l'avance ou en fonction d'une manipulation au niveau du terminal (PC) de l'abonné appelé.

2. Procédé selon la revendication 1,
**caractérisé en ceque**
les liaisons entrantes signalées par le biais du réseau de données (IP) sont traitées en fonction d'une adresse de communication d'un raccordement de communication vocale (A) faisant une requête de connexion.

3. Procédé selon l'une des revendications 1 ou 2,
**caractérisé en ce que**,
pour mettre fin au contrôle du raccordement de communication vocale, on signale à l'élément de réseau (V, I-MSC, HLR) gérant le raccordement de communication vocale de l'abonné que les liaisons entrantes n'ont plus besoin d'être gérées au moyen du terminal (PC).

4. Procédé selon l'une des revendications 1 à 3,
**caractérisé en ce**
**qu'**on utilise l'Internet en tant que réseau de données (IP).

5. Procédé selon l'une des revendications 1 à 4,
**caractérisé en ce**
**qu'**on utilise, en tant que raccordement de communication vocale, un raccordement téléphonique classique.

6. Procédé selon l'une des revendications 1 à 5,
**caractérisé en ce**
**que** l'on utilise, en tant que raccordement de communication vocale, un raccordement de téléphonie mobile.
